# FASCICULE DE BREVET EUROPEEN

(11) **EP 0 575 233 B1**
(45) Date de publication et mention de la délivrance du brevet: **28.08.1996**
(21) Numéro de dépôt: 93401515.7
(22) Date de dépôt: 14.06.1993
(51) Int. Cl.: A23L 1/325, A23P 1/00

(54) **Procédé de fabrication industrielle d'aliment**
Verfahren zur industriellen Herstellung eines Nahrungsmittels
Process for the industrial production of foodstuff

(30) Priorité: 15.06.1992 FR 9207207
(43) Date de publication de la demande: 22.12.1993
(73) Titulaire: NEPTUNE Société Anonyme, F-78220 Viroflay (FR)
(72) Inventeur: Corbet, Alain, F-14330 Le Molay Litry (FR)
(74) Mandataire: Orès, Bernard

(56) Documents cités:
- EP-A- 0 132 363
- EP-A- 0 415 800
- EP-A- 0 443 464
- US-A- 4 781 929
- PATENT ABSTRACTS OF JAPAN vol. 14, no. 497 (C-774)30 Octobre 1990

## Description

L'invention se rapporte principalement à un procédé de fabrication industrielle d'un aliment.

Il est connu de réaliser de la mêlée crue de kamaboko par mélange de surimi haché avec notamment de l'eau et des arômes. Cette mêlée est extrudée en forme de bandes, puis cuite, ce qui lui confère de la consistance. La bande est scarifiée.

Cette bande est généralement enroulée transversalement sur elle-même et découpée en bâtonnets de kamaboko.

Cette bande peut également être superposée sur une épaisseur prédéterminée de l'ordre de 1 à 3 cm, réalisée par exemple par le procédé décrit dans la Demande de Brevet japonais H1-26 412 déposée le 3 Février 1989 par OHKI ENGINEERING CO et publiée sous le numéro H2 207 771 le 17 Août 1990.

L'assemblage obtenu est découpé en cubes de différentes tailles. Les bâtonnets comme des cubes ont de très bonnes caractéristiques organoleptiques se rapprochant de la chair fibreuse du crabe. Toutefois, les bâtonnets comme les cubes, comportant une superposition de bandes non liées entre elles, n'ont pas la résistance mécanique nécessaire, notamment à une découpe en tranches fines.

L'on connaît également l'incorporation, dans de la mêlée crue de kamaboko, de morceaux hétérogènes de kamaboko cuits. Le produit obtenu possède des propriétés organoleptiques complètement différentes des produits obtenus par assemblage de bandes de kamaboko cuites scarifiées.

C'est par conséquent un but de la présente invention d'offrir un procédé de fabrication d'un produit alimentaire ayant une consistance permettant de le découper en tranches fines.

C'est également un but de la présente invention d'offrir un procédé de fabrication d'un produit alimentaire permettant de donner à ce produit les dimensions et la forme désirées.

C'est aussi un but de la présente invention d'offrir un procédé de fabrication d'un produit alimentaire ayant une texture permettant de bonnes propriétés organoleptiques.

C'est également un but de la présente invention d'offrir un procédé de fabrication d'un produit industriel ayant une belle présentation.

C'est aussi un but de la présente invention d'offrir un procédé de fabrication d'un produit alimentaire facilement industrialisable et automatisable.

L'invention a principalement pour objet un procédé de fabrication d'un aliment comportant une étape de mise en forme d'une mêlée et une étape de cuisson, caractérisé en ce qu'il comporte les étapes consistant à:
- mettre en forme une première couche ou bande de mêlée;
- cuire la première bande mise en forme;
- déposer sur la première couche ou bande cuite une nouvelle couche de mêlée crue;
- mettre en forme la bande comportant une superposition de mêlée cuite et de mêlée crue pour obtenir une pièce massive;
- cuire la pièce mise en forme.

L'invention a également pour objet un procédé, caractérisé en ce qu'il comporte, antérieurement à la cuisson de la pièce mise en forme, une étape d'empilement d'alternance de couches ou bandes cuites et de nouvelles couches de mêlée crues.

L'invention a également pour objet un procédé, caractérisé en ce que la mêlée est une mêlée de pulpe obtenue à partir de chair de poisson hachée, lavée et raffinée, apte à la gélification, notamment additionnée d'agents stabilisants du type cryoprotecteurs, en vue de sa conservation par congélation et dont l'humidité est inférieure à 80 %.

L'invention a également pour objet un procédé, caractérisé en ce qu'il comporte une étape de scarification de la couche ou bande cuite antérieurement au dépôt de la nouvelle couche de mêlée crue.

L'invention a également pour objet un procédé, caractérisé en ce qu'il comporte une étape d'emballage de l'empilement d'alternance de couches ou bandes cuites et de nouvelles couches de mêlée crues dans une couche ou bande de mêlée cuite.

L'invention a également pour objet un procédé, caractérisé en ce qu'il comporte une étape d'emballage dans un sac sous vide, antérieurement à la cuisson de la pièce mise en forme.

L'invention a également pour objet un procédé, caractérisé en ce que le sac est un sac rétractable sous l'action de la chaleur.

L'invention a également pour objet un procédé, caractérisé en ce que le dépôt de la nouvelle couche de mêlée crue est réalisé par extrusion.

L'invention a également pour objet un procédé, caractérisé en ce que les couches ou bandes cuites ont été obtenues par la cuisson de couches ou bandes extrudées.

L'invention a également pour objet un procédé, caractérisé en ce que la cuisson est réalisée à une pression supérieure à la pression atmosphérique, notamment dans un autoclave.

L'invention sera mieux comprise au moyen de la description ci-après et des figures annexées données comme des exemples non limitatifs et sur lesquelles:
- la figure 1 est un schéma synoptique du déroulement du procédé selon la présente invention ;
- la figure 2 est une vue de dessus d'une tranche de l'aliment obtenu par un procédé selon la présente invention ;
- la figure 3 est un agrandissement partiel de l'aliment de la figure 2 illustrant sa texture.

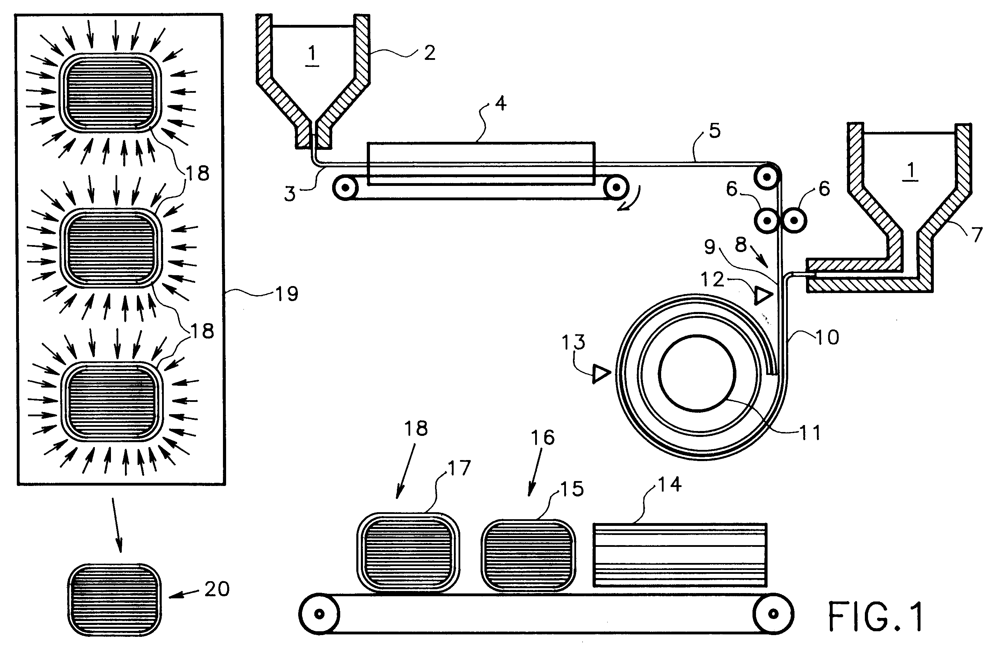

Sur les figures 1 à 3, l'on a utilisé les mêmes références pour désigner les mêmes éléments.

Sur la figure 1, l'on peut voir le déroulement du procédé selon la présente invention. Par extrusion de la mêlée de kamaboko crue dans une extrudeuse 2, l'on obtient une bande de mêlée de kamaboko crue 3 sans consistance.

La bande de kamaboko crue 3 est cuite dans un four 4, par exemple dans un four de type tunnel avec apport de chaleur sous forme de vapeur et/ou de rayonnement infrarouge. A la sortie du four 4, l'on obtient une bande 5 de kamaboko cuite qui, de ce fait, a pris de la consistance.

Cette bande est scarifiée par des rouleaux scarificateurs 6. Sur la bande scarifiée, l'on extrude, à partir d'une extrudeuse 7, de la mêlée de kamaboko crue.

La mêlée de kamaboko crue doit être extrudée à une température inférieure à la température de gélification de kamaboko crue, par exemple à une température inférieure ou égale à 15°C, de préférence inférieure ou égale à 10°C.

L'on a ainsi obtenu une bande 8 composée d'une bande de kamaboko cuite 9 sur laquelle a été déposée une couche de mêlée de kamaboko crue 10. De nombreuses couches de la bande 8 sont superposées, par exemple par enroulement de la bande 8 sur un cylindre tournant 11. L'on réalise ainsi une alternance de bandes de kamaboko cuites, avantageusement scarifiées et de couches de mêlée crues de kamaboko. La mêlée crue de kamaboko joue le rôle de colle assurant la cohésion entre deux bandes de kamaboko cuites adjacentes. Lorsque l'épaisseur désirée de la bande 8 a été enroulée sur le cylindre tournant 11, l'on coupe l'empilement de la bande 8 avec un premier couteau 12, et avec un second couteau 13, la bande 8 arrivant sur le cylindre 11. L'on obtient, à ce moment, un pain 14 de kamaboko comportant des alternances de bandes de kamaboko cuites avantageusement scarifiées et de couches de liaison en mêlée de kamaboko crue. Le pain 14 est en fait une pièce en matériaux composites.

Le pain 14 est emmailloté dans une ou dans plusieurs bandes de kamaboko cuites 15 pour obtenir une pièce en forme de jambon 16 qui est à son tour emballée sous vide dans un sac 17 rétractable sous l'action de la chaleur, pour former une pièce 18 destinée à être cuite dans un four 19. L'emballage sous vide permet l'élimination des bulles incorporées en cours de fabrication, tandis que la présence de la paroi rétractable du sac assure une constriction de la pièce 18 s'opposant à la dilatation et à l'éclatement du produit lors de la cuisson.

Avantageusement, le four 19 est un four pressurisé par exemple à 2,2 10⁵ Pa (pression absolue), notamment du type autoclave. La pression régnant dans le four 19 participe à la constriction de la pièce 18 durant la cuisson pour prévenir sa dislocation.

L'invention n'est pas limitée au maintien de la pression, durant la cuisson, avec un fluide, mais peut, au contraire, être exercée mécaniquement. Dans une variante du procédé selon l'invention, les pièces 18 sont placées antérieurement à la cuisson dans des moules à jambon dont les coquilles sont maintenues par des ressorts.

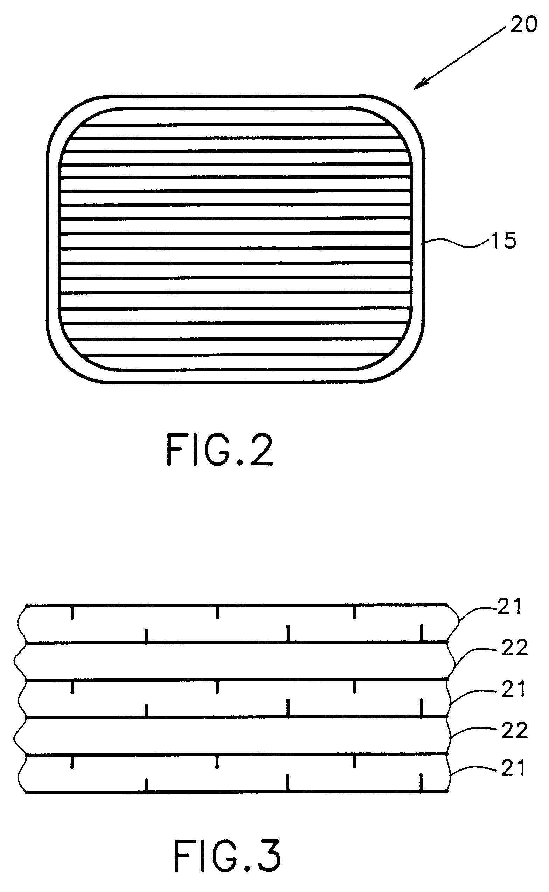

Le temps et la température de cuisson dépendent de la taille de la pièce 18. Par exemple, pour une pièce 18 pesant 6 kg, le temps de cuisson est compris entre 4 et 6 heures à une température de 95°C. A la fin de la cuisson, l'on obtient un produit alimentaire 20 en forme de jambon dont une tranche est représentée sur les figures 2 et 3. Le produit 20 comporte une ou deux couches extérieures 15 assurant la cohésion et donnant l'impression de former une croûte de la pièce 20. L'intérieur de la pièce 20, comme l'on peut mieux le voir sur la figure 3, est composé d'une succession de couches scarifiées 21 et de couches non scarifiées 22 de kamaboko cuites adhérant les unes aux autres.

Toutefois, un procédé ne mettant pas en oeuvre les rouleaux scarificateurs 6 ne sort pas du cadre de la présente invention. Par un tel procédé, l'on obtient une pièce 20 composée d'un empilement de couches de kamaboko cuites adhérentes, non scarifiées.

La présente invention s'applique notamment à la réalisation de produits alimentaires ayant une texture très agréable.

L'invention s'applique principalement à la réalisation de pièces massives en kamaboko cuites composites.

## Revendications

1. Procédé de fabrication d'un aliment comportant une étape de mise en forme d'une mêlée (1) et une étape de cuisson, caractérisé en ce qu'il comporte les étapes consistant à:
- mettre en forme une première couche ou bande (3) de mêlée (1);
- cuire la première bande (3) mise en forme;
- déposer sur la première couche ou bande cuite (5,9) une nouvelle couche de mêlée crue (10);
- mettre en forme la bande (8) comportant une superposition de mêlée cuite (9) et de mêlée crue (10) pour obtenir une pièce massive (16,18);
- cuire la pièce mise en forme (18).

2. Procédé selon la revendication 1, caractérisé en ce qu'il comporte, antérieurement à la cuisson de la pièce mise en forme (18), une étape d'empilement d'alternance de couches ou bandes cuites (5,9) et de nouvelles couches de mêlée crues (10).

3. Procédé selon la revendication 1 ou 2, caractérisé en ce que la mêlée (1) est une mêlée de pulpe obtenue à partir de chair de poisson hachée, lavée et raffinée, apte à la gélification, notamment additionnée d'agents stabilisants du type cryoprotecteurs, en vue de sa conservation par congélation et dont l'humidité est inférieure à 80 %.

4. Procédé selon l'une quelconque des revendications précédentes, caractérisé en ce qu'il comporte une étape de scarification de la couche ou bande cuite (5) antérieurement au dépôt de la nouvelle couche de mêlée crue (10).

5. Procédé selon l'une quelconque des revendications 2 à 4, caractérisé en ce qu'il comporte une étape d'emballage de l'empilement d'alternance de couches ou bandes cuites (5,9) et de nouvelles couches de mêlée crues (10) dans une couche ou bande de mêlée cuite (15).

6. Procédé selon l'une quelconque des revendications précédentes, caractérisé en ce qu'il comporte une étape d'emballage dans un sac (17) sous vide, antérieurement à la cuisson de la pièce mise en forme (18).

7. Procédé selon la revendication 6, caractérisé en ce que le sac (17) est un sac rétractable sous l'action de la chaleur.

8. Procédé selon l'une quelconque des revendications précédentes, caractérisé en ce que le dépôt de la nouvelle couche de mêlée crue (10) est réalisé par extrusion.

9. Procédé selon l'une quelconque des revendications précédentes, caractérisé en ce que les couches ou bandes cuites (5) ont été obtenues par la cuisson de couches ou bandes extrudées (3).

10. Procédé selon l'une quelconque des revendications précédentes, caractérisé en ce que la cuisson est réalisée à une pression supérieure à la pression atmosphérique, notamment dans un autoclave (19).

## Claims

1. A method of manufacturing a foodstuff comprising a stage involving the shaping of a mix (1) and a cooking stage, characterized in that it comprises the stages consisting of:
- shaping a first layer or strip (3) of mix (1);
- cooking the first shaped strip (3);
- depositing on the first cooked layer or strip (5, 9) a fresh layer of raw mix (10);
- shaping the strip (8) comprising a superimposition of cooked mix (9) and raw mix (10) in order to obtain a solid piece (16, 18);
- cooking the shaped piece (18).

2. A method according to claim 1, characterized in that prior to the cooking of the shaped piece (18), there is a stage involving the alternate stacking of cooked layers or strips (5, 9) and fresh layers of raw mix (10).

3. A method according to claim 1 or 2, characterised in that the mix (1) is a pulp mix obtained from chopped, washed and refined fish flesh, suitable for gelling, and particularly with added stabilizing agents of the cryoprotector type, with a view to its being preserved by freezing, and the moisture content of which is less than 80%.

4. A method according to any one of the preceding claims, characterised in that it comprises a stage involving scarification of the cooked layer or strip (5) prior to deposition of the fresh layer of raw mix (10).

5. A method according to any one of claims 2 to 4, characterised in that it comprises a stage embracing packaging, alternately stacking cooked layers or strips (5, 9) and fresh layers of raw mix (10) in a layer or strip of cooked mix (15).

6. A method according to any one of the preceding claims, characterised in that it comprises a stage of packaging in a vacuum bag (17) prior to the cooking of the shaped piece (18).

7. A method according to claim 6, characterised in that the bag (17) is a bag which shrinks under the action of heat.

8. A method according to any one of the preceding claims, characterised in that deposition of the fresh layer of raw mix (10) is carried out by extrusion.

9. A method according to any one of the preceding claims, characterised in that the cooked layers or strips (5) have been obtained by the cooking of extruded layers or strips (3).

10. A method according to any one of the preceding claims, characterised in that cooking is carried out at a pressure which is above atmospheric pressure, particularly in an autoclave (19).

## Patentansprüche

1. Verfahren zur Herstellung eines Nahrungsmittels, das einen Schritt des Formens eines Gemisches (1) und einen Schritt des Garenz umfaßt,
dadurch gekenzeichnet,
daß es die folgenden Schritte aufweist:
- eine erste Schicht oder ein erstes Band (3) aus dem Gemisch (1) wird in eine Form gebracht,
- das erste in eine Form gebrachte Band (3) wird gegart,
- auf die erste gegarte Schicht oder das erste gegarte Band (5, 9) wird eine neue Schicht (10) aus dem rohen Gemisch aufgebracht,
- das Band (8), das aus einer Überlagerung von gegartem Gemisch (9) und rohem Gemisch (10) besteht, wird in eine Form gebracht, um ein massives Stück (16, 18) zu erhalten,
- das in eine Form gebrachte Stück (18) wird gegart.

2. Verfahren nach Anspruch 1,
dadurch gekennzeichnet,
daß es, vor dem Garen des in Form gebrachten Stücks (18), einen Schritt des abwechselnden Stapelns von gegarten Schichten oder Bändern (5, 9) und neuen rohen Schichten (10) des rohen Gemisches aufweist.

3. Verfahren nach Anspruch 1 oder 2,
dadurch gekennzeichnet,
daß das Gemisch (1) ein Pulpegemisch ist, das aus gehacktem, gewaschenem und raffiniertem Fischfleisch erhalten ist, das zum Eingefrieren geeignet ist und das insbesondere zum Zweck seiner Konservierung durch Einfrieren mit Stabilisatoren vom Typ der Tieftemperaturschutzmittel versetzt ist und dessen Feuchtigkeit weniger als 80 % beträgt.

4. Verfahren nach einem der vorhergehenden Ansprüche,
dadurch gekennzeichnet,
daß es einen Schritt des Aufreißens der gegarten Schicht oder des gegarten Bandes (5) vor dem Aufbringen der neuen Schicht (10) des rohen Gemisches umfaßt.

5. Verfahren nach einem der Ansprüche 2 bis 4,
dadurch gekennzeichnet,
daß es einen Schritt des Verpackenz des abwechselnden Stapelns von gegarten Schichten oder Bändern (5, 9) und neuen Schichten (10) des rohen Gemisches in einer Schicht oder einem Band (15) des gegarten Gemisches umfaßt.

6. Verfahren nach einem der Ansprüche 2 bis 4,
dadurch gekennzeichnet,
daß es einen Schritt des Verpackens in einem Beutel (17) im Vakuum vor dem Garen des in Form gebrachten Stücks (18) umfaßt.

7. Verfahren nach Anspruch 6,
dadurch gekennzeichnet,
daß der Beutel (17) ein unter der Einwirkung von Wärme schrumpfender Beutel ist.

8. Verfahren nach einem der vorhergehenden Ansprüche,
dadurch gekennzeichnet,
daß das Aufbringen der neuen Schicht (10) aus rohem Gemisch durch Extrusion vorgenommen wird.

9. Verfahren nach einem der vorhergehenden Annsprüche,
dadurch gekennzeichnet,
daß die gegarten Schichten oder Bänder (5) durch das Garen von extrudierten Schichten oder Bändern (3) erhalten werden.

10. Verfahren nach einem der vorhergehenden Ansprüche,
dadurch gekennzeichnet,
daß das Garen bei einem Druck, der höher als der atmosphärische Druck ist, insbesondere in einem Autoklaven (19) vorgenommen wird.
